## Europäisches Patentamt

## European Patent Office

## Office européen des brevets

(19)

(11) Veröffentlichungsnummer: **0 080 181 B1**

(12) # EUROPÄISCHE PATENTSCHRIFT

(45) Veröffentlichungstag der Patentschrift:
26.02.86

(21) Anmeldenummer: 82110685.3

(22) Anmeldetag: 19.11.82

(51) Int. Cl.⁴: **F 16 K 1/44**

(54) Verfahren zur Montage eines Doppelsitzventils und Regler-Ventil-Kombination mit solchen Doppelsitzventilen.

(30) Priorität: 25.11.81 DE 3146591

(43) Veröffentlichungstag der Anmeldung:
01.06.83 Patentblatt 83/22

(45) Bekanntmachung des Hinweises auf die Patenterteilung:
26.02.86 Patentblatt 86/9

(84) Benannte Vertragsstaaten:
AT BE CH FR GB IT LI NL

(56) Entgegenhaltungen:
AT - B - 160 224
DE - C - 1 057 408
DE - U - 1 968 399
US - A - 1 567 030
US - A - 1 649 566
US - A - 1 991 032

(73) Patentinhaber: Karl Dungs GmbH & Co., D-7067 Urbach (DE)

(72) Erfinder: Dungs, Karl, Künkelinstrasse 52,
D-7060 Schorndorf (DE)
Erfinder: Feucht, Friedrich, Weinbergweg 56,
D-7064 Remshalden (DE)
Erfinder: Schmid, Hermann, Gerundweg 10,
D-7067 Urbach/N. (DE)
Erfinder: Schwarz, Walter, Im Schöllerfeld 15,
D-7060 Schorndorf/Weiler (DE)

(74) Vertreter: Patentanwälte Kohler - Schwindling - Späth,
Hohentwielstrasse 41, D-7000 Stuttgart 1 (DE)

**Beschreibung**

Die Erfindung betrifft ein Verfahren zur Montage eines Doppelsitzventils, das eine Kammer, die in einer Seite eine freie Öffnung und in an die Öffnung angrenzenden, einander gegenüberliegenden Wänden zwei zueinander koaxial angeordnete Ventilsitze aufweist, sowie zwei auf einer gemeinsamen Stange befestigte, mit den Ventilsitzen zusammenwirkende Ventilteller umfaßt, von denen der in Schließrichtung vordere Ventilteller durch den in Schließrichtung hinteren Ventilsitz hindurchpaßt.

Ein solches Doppelsitzventil ist aus der US—A—1 567 030 bekannt. Da der in Schließrichtung vordere Ventilteller durch den in Schließrichtung hinteren Ventilsitz hindurchpaßt, kann die Stange mit den Ventilsitzen außerhalb des Gehäuses montiert und dann einfach in das Gehäuse eingesteckt werden. Die Ventilsitze sind bei dem bekannten Ventil auf der Stange zwischen Schraubmuttern gehalten, so daß sie in Bezug auf die Stange in eine genau definierte Lage gebracht werden können. Zwar kann das Justieren der Ventilsitze auf der Stange außerhalb des Ventilgehäuses erfolgen, jedoch ist dazu ein Arbeiten mit hoher Präzision erforderlich, wozu geschulte Fachkräfte benötigt werden. Weiterhin setzt ein einwandfreies Schließen des Doppelsitzventiles voraus, daß auch die Ventilsitze genau einen vorgegebenen Abstand haben, damit beide Ventilteller bei geschlossenem Ventil einwandfrei an ihren Ventilsitzen abliegen. Infolgedessen ist auch eine Fertigung des Ventilgehäuses mit sehr hoher Präzision erforderlich. Die bei der Herstellung von Doppelsitzventilen erforderliche hohe Genauigkeit schlägt sich in den hohen Kosten solcher Ventile nieder. Daher ist der Einsatz solcher Ventile sehr begrenzt, obwohl sie wegen der für Doppelsitzventile charakteristischen Entlastung und des geringen Druckabfalles infolge großer Strömungsquerschnitte sehr vorteilhaft sind.

Der Erfindung liegt daher die Aufgabe zugrunde, ein Verfahren zur Montage solcher Doppelsitzventile anzugeben, das es ermöglicht, ohne die Einhaltung enger Toleranzen und schwieriger Justierarbeiten auszukommen und dadurch die Gestehungskosten von Doppelsitzventilen bedeutend zu vermindern, so daß sie in größerem Maße als bisher Anwendung finden können.

Diese Aufgabe wird nach der Erfindung dadurch gelöst, daß der in Schließrichtung hintere Ventilteller auf der Stange starr befestigt wird, daß der zweite, in Schließrichtung vordere Ventilteller auf die gleiche Stange lose aufgesteckt und mit seiner dem ersten Ventilteller zugewandten Seite an einer auf der Stange angeordneten Feder abgestützt wird, daß die Stange und der zweite Ventilteller mit einem Kleber versehen werden, daß die Stange mit dem zweiten Ventilteller gegebenenfalls unter gleichzeitigem Zusammenpressen dieses Ventiltellers, durch den dem ersten Ventilteller zugeordneten Ventilsitz hindurchgesteckt wird und der erste Ventilteller an dem ihm zugeordneten Ventilsitz zur Anlage gebracht wird, während gleichzeitig der zweite Ventilteller von der Feder an dem ihm zugeordneten Ventilsitz in Anlage gehalten wird, und daß die Anordnung in dieser Stellung bis zum Abbinden des Klebers belassen wird.

Durch das erfindungsgemäß Verfahren ist gewährleistet, daß sich die beiden Ventilteller automatisch auf den Abstand des Ventilsitzes genau einstellen, wobei noch durch ein Montagegerät und die den zweiten Ventilteller belastende Feder gewährleistet sein kann, daß beide Ventilteller mit genau definierten Anpreßdrücken an den zugeordneten Ventilsitzen anliegen. Nach dem Abbinden des Klebers ist auch der zweite Ventilteller mit der Stange starr verbunden und es sind die beide Ventilteller mit unveränderlichem Abstand voneinander angeordnet. Es ist zwar bei diesem Verfahren notwendig, die einmal gewählte Zuordnung von Ventilsitzen und Ventiltellern beizubehalten, jedoch bereitet diese Maßnahme keine Schwierigkeiten, während für die Herstellung der Ventilsitze, Ventilteller und deren Antriebsorgane keine engen Toleranzen eingehalten werden müssen.

Für den Fall, daß bei hohen Beanspruchungen die Gefahr besteht, daß die durch den Kleber geschaffene Verbindung zwischen Ventilteller und Stange nicht dauerhaft genug ist, kann die Stange mit den Ventiltellern nach dem Abbinden des Klebers von den Ventilsitzen wieder getrennt und der zweite Ventilteller mit der Ventilstange zusätzlich formschlüssig verbunden, insbesondere verstiftet werden.

Als Feder kann insbesondere eine auf die Stange aufgeschobene, sich an dem ersten Ventilteller abstützende Schraubendruckfeder verwendet werden. Auch wenn diese Feder nach der Befestigung des zweiten Ventiltellers verloren ist und auf der Stange keine Funktion mehr hat, spielt das keine große Rolle, weil eine Schraubendruckfeder ein sehr einfaches Bauteil ist und bei ihrer Verwendung keine besonderen Maßnahmen zur Halterung getroffen werden müssen. Auch nimmt sie auf der Stange zwischen den Ventilsitzen keinen Platz in Anspruch, der für andere Zwecke benötigt würde.

Die Tatsache, daß ein Ventil unter Verwendung des erfindungsgemäßen Montageverfahrens hergestellt worden ist, läßt sich leicht daran erkennen, daß bei dem fertiggestellten Doppelsitzventil wenigstens einer der beiden Ventilteller auf dem gemeinsamen Stößel durch Kleben befestigt ist und auf dem Stößel eine den durch Kleben befestigten Ventilteller im Sinne eines Schließens des Ventiles belastende Feder angeordnet ist. Dabei ist charakteristisch, daß eine solche Feder beim fertiggestellten Ventil keine erkennbare Funktion mehr hat.

Die oben angegebenen Vorteile von Doppelsitzventilen sind insbesondere für die bei Gasfeuerungsanlagen Verwendung findenden Armaturen ein Bedeutung, in denen ein Ventil und ein Druckregler kombiniert sind. Die

2

Erfindung macht es möglich, gerade solche Regler-Ventil-Kombinationen unter Verwendung von nach dem erfindungsgemäßen Verfahren hergestellten Doppelsitzventilen auszubilden. Es ist ohne weiteres ersichtlich, daß bei Regler-Ventil-Kombinationen mit zwei Doppelsitzventilen das Einhalten der bisher notwendigen Toleranzen und die damit verbundenen Justierarbeiten besonders schwierig waren. Durch die Erfindung sind diese Schwierigkeiten vermieden.

Gegenstand der Erfindung ist daher auch eine Regler-Ventil-Kombination, bei der zwei nach dem erfindungsgemäßen Verfahren hergestellte Doppelsitzventile Verwendung finden. Bei der erfindungsgemäßen Regler-Ventil-Kombination sind die beiden Doppelsitzventile in einem gemeinsamen Gehäuse angeordnet, ihre Stangen mit einem Elektromagneten bzw. einem Reglerantrieb verbunden und ihre an die Außenseite der Ventilteller angrenzenden Räume paarweise miteinander und durch einen Querkanal untereinander verbunden, in welchen Querkanal ein Rohr mündet, das eine Verbindung zur Solldruck-Kammer des Reglers herstellt.

Bei der erfindungsgemäßen Regler-Ventil-Kombination werden die Vorteile der Doppelsitz-Ventile in besonders hohem Maße ausgenutz. Die Verbindung der · beiden Ventilanordnungen an dem die Außenseiten der Ventilteller angrenzenden Räumen schafft einerseits einen besonders großen Strömungsquerschnitt innerhalb des Ventilgehäuses und ermöglicht andererseits einen einfachen Anschluß der Zu- und Abführleitungen, weil diesen Leitungen jeweils der zwischen den Ventiltellern sitzende, einzige Kanal des Ventils bzw. Reglers zugewandt ist. Gleichzeitig ist eine solche Anordnung für eine genaue Drucküberwachung von besonderem Vorteil, weil in dem Querkanal, der eine Verbindung zwischen den beiden Strömungswegen herstellt, welche die beiden Außenseiten der beiden Ventilteller miteinander verbinden, ein Druckausgleich stattfindet, der von den Strömungsverhältnissen weitgehend unabhängig ist, so daß eine störungsfreie Druckerfassung gewährleistet ist.

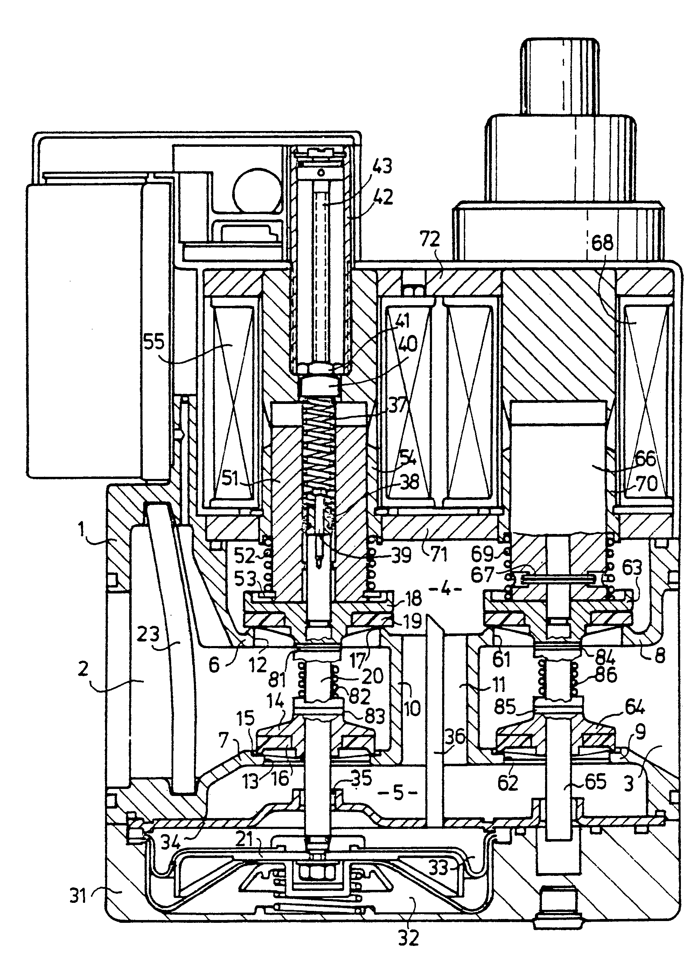

Die Erfindung wird im folgenden anhand des in der Zeichnung dargestellten Ausführungsbeispieles näher beschrieben und erläutert. Die der Beschreibung und der Zeichnung zu entnehmenden Merkmale können bei anderen Ausführungsformen der Erfindung einzeln für sich oder zu mehreren in beliebiger Kombination Anwendung finden. Die Zeichnung zeigt einen Längsschnitt durch eine Regler-Ventil-Kombination, deren Regler und deren Ventil beide nach der Erfindung ausgebildet sind.

Die in der Zeichnung dargestellte Regler-Ventil-Kombination weist ein mittleres Gehäuseteil 1 auf, das im wesentlichen vier Kammern enthält, nämlich eine an die in der Zeichnung linke Außenfläche angrenzende Eingangskammer 2, eine an die in der Zeichnung rechte Außenfläche angrenzende Ausgangskammer 3 und zwei mittlere Kammern 4 und 5, von denen die erste einen oberen und die zweite einen unteren Gehäuseabschnitt einnimmt. Die Eingangs- und Ausgangskammern 2, 3 sind von der oberen Kammer 4 und der unteren Kammer 5 jeweils durch horizontale Wände 6, 7 bzw. 8, 9 und außerdem voneinander durch eine Querwand 10 getrennt. In der Querwand 10 befindet sich ein Querkanal 11, der die beiden mittleren Kammern 4, 5 miteinander verbindet.

In der horizontalen Wänden 6 und 7, welche die Eingangskammer 2 von den beiden mittleren Kammern 4 und 5 trennen, befindet sich je ein Ventilsitz 12 bzw. 13. Der in der Zeichnung untere Ventilsitz 13 hat eine ebene Anlagefläche, auf welcher ein Ventilteller 14 mit einem schneidenförmigen Rand 15 aufsitzt. Der schneidenförmige Rand 15 befindet sich an einer aus elastischem Material bestehenden Platte 16, die an der Unterseite des Ventiltellers 14 angebracht ist. Der Ventilteller 14 hat den gleichen Durchmesser wie der obere Ventilsitz 12, der seinerseits einen schneidenförmigen Rand 17 besitzt, auf dem der in der Zeichnung obere Ventilteller 18 mit einer ebenen Anlagefläche aufliegt, die sich an der Unterseite einer am Ventilteller 18 angebrachten Platte 19 aus elastischem Material befindet. Beide Ventilteller 14 und 18 sind an einer zur Ebene der Ventilsitze und Ventilteller senkrechten Stange 20 derart starr befestigt, daß beide Ventilteller gleichzeitig an den Ventilsitzen dicht anliegen. Die Stange 20 durchdringt die beiden Ventilsitze und ist an einem Ende mit der Membran 21 eines Gasdruckreglers verbunden. Außerdem wirkt auf das von der Stange 20 mit den beiden Ventiltellern 14, 18 gebildete Verschlußglied der Anker 51 eines Magnetventils.

Wie aus der Zeichnung ersichtlich, befindet sich bei dem dargestellten Ausführungsbeispiel die Membran 21 des Gasdruckreglers in einem unteren Gehäuseteil 31, das an der Unterseite des mittleren Gehäuseteiles 1 befestigt ist und einen Hohlraum enthält, der durch die Membran 21 in zwei Kammern 32, 33 unterteilt ist. Die obere Kammer 33 ist von der unteren, mittleren Kammer 5 des mittleren Gehäuseteiles 1 durch eine Zwischenwand 34 getrennt, die zwischen den beiden Gehäuseteilen 1 und 31 dicht angeordnet ist. Die Stange 20 ist durch diese Zwischenwand 34 hindurchgeführt. Dabei kann die Kammer 33 mit der mittleren unteren Kammer 5 des mittleren Gehäuseteiles 1 über die zum Hindurchführen der Stange 20 vorgesehene Öffnung 35 in Verbindung stehen. Außerdem ist ein den Querkanal 11 durchsetzendes Rohr 36 vorgesehen, das einerseits in der mittleren oberen Kammer 4 und andererseits in der Zwischenwand 34 mündet, so daß die obere Kammer 33 des Gasdruckreglers auch mit der oberen Kammer 4 des mittleren Gehäuseteiles 1 in Verbindung steht. Auf diese Weise ist gewährleistet, daß in der Kammer 33 des Gasdruckreglers ein Druck herrscht, der für den mittleren Druck in den durch den Querkanal 11 miteinander verbundenen Kammern 4 und 5 charakteristisch ist. Es ist ersichtlich, daß der auf die Membran 21 wirkende Gasdruck bestrebt ist, die Membran 21 mit der Stange 20 nach unten zu bewegen und dadurch die Ventilteller 14, 18 an ihre Ventilsitze 12, 13 anzulegen, also den Durchgang von der Kammer 2 nach den Kammern 4, 5 zu verschließen. Diesem Gasdruck wirkt eine Regelfeder 37 entgegen, die als Schraubenzugfeder ausgebildet ist und an dem der Membran 21 entgegengesetzten Ende der Stange 20 angreift. Diese Schraubenzugfeder trägt an einem Ende ein Anschlußstück 38 und ist mittels einer Schraube 39 an der Stirnfläche der Stange 20 befestigt, wie aus der Zeichnung ersichtlich. Das andere Ende der Schraubenzugfeder 37 ist mit einem Gleitstück 40 versehen, das mit einem im Querschnitt sechseckigen Ansatz in einem entsprechend profilierten Rohr 42 unverdrehbar geführt ist. Dieses Rohr 42 ist koaxial zur Stange 20 und zur daran anschließenden Schraubenzugfeder 37 angeordnet und enthält eine Stellschraube 43, die an dem der Regelfeder 37 abgewandten Ende des Rohres 42 verdrehbar, aber axial unverschiebbar gelagert ist. Diese Stellschraube 43 greift in ein Innengewinde des Gleitstückes 40 ein, so daß durch Verdrehen der Stellschraube 43 das Gleitstück 40 in Längsrichtung des Rohres 42 verschiebbar ist. Dadurch läßt sich die Spannung der Regelfeder 37 in weiten Grenzen verändern und der Solldruck einstellen, bei dessen Unterschreiten die Ventilteller 14, 18 des Reglers von ihren Sitzen 12, 13 abheben.

Der Gasdruckregler ist bei dem dargestellten Ausführungsbeispiel mit einem ersten Magnetventil kombiniert, dessen Anker 51 koaxial zur Stange 20 und zur Regelfeder 37 angeordnet ist und eine zentrale Bohrung zur Aufnahme dieser Bauelemente aufweist. Das untere Ende des Ankers 51 ist von einer Schraubendruckfeder 52 umgeben, die sich mit ihrem unteren Ende an einer Schulter des Ankers 51 abstützt, die bei dem dargestellten Ausführungsbeispiel von einem in eine Ringnut des Ankers 51 eingesetzten Sprengring 53 gebildet wird. Das obere Ende der Schraubendruckfeder 52 stützt sich an der unteren Stirnfläche einer Magnetschlußhülse 54 des Magnetventiles ab. Bei nichterregtem Magnetventil sitzt der Anker 51 unter der Kraft der Schraubendruckfeder 52 auf der Oberseite des oberen Ventiltellers 18 auf und hält dadurch den Regler fest geschlossen. Wird dagegen der Elektromagnet erregt, indem die die Magnetschlußhülse 54 umgebende Spule 55 mit Strom gespeist wird, wird der Anker 51 von dem Ventilteller 18 abgehoben und gibt dadurch den Regler frei, der gemäß dem herrschenden Gasdruck mehr oder weniger weit öffnet oder schließt.

Ebenso wie in den horizontalen Wänden 6, 7 befinden sich auch in den horizontalen Wänden 8, 9 des mittleren Gehäuseteiles 1 Ventilsitze 61, 62, mit denen Ventilteller 63, 64 zusammenwirken, die auf einer Stange 65 starr befestigt sind. Die Ausbildung der Ventilsitze 61, 62 und der Ventilteller 63, 64 sowie deren Anordnung auf der Stange 65 stimmt mit der vorstehend beschriebenen Anordnung des Gasdruckreglers vollständig überein, so daß sich eine nochmalige Beschreibung dieser Anordnung erübrigt. Ein Unterschied besteht lediglich insofern, als die Stange 65 nicht mit der Membran eines Gasdruckreglers verbunden ist, sondern ausschließlich mit dem Anker 66 eines weiteren Magnetventils. Dabei besteht zwischen dem Anker 66 und der Stange 65 eine formschlüssige Verbindung, die durch einen Querbohrungen durchsetzenden Stift 67 hergestellt ist, so daß beim Anziehen des Ankers 66 infolge Erregung der Spule 68 die Ventilteller 63, 64 zwangsweise von ihren Ventilsitzen 61, 62 abgehoben werden. Bei nichterregtem Magnetventil werden die Ventilteller 63, 64 von einer Schraubendruckfeder 69 in geschlossener Stellung gehalten, welche den Anker 66 umgibt und sich einerseits wiederum am unteren Ende einer Magnetschlußhülse 70 und andererseits an der Oberseite des Ventiltellers 63 abstützt.

Ähnlich wie die untere mittlere Kammer 5 des mittleren Gehäuseteiles 1 durch die Zwischenwand 34 abgeschlossen ist, ist die obere mittlere Kammer 4 des mittleren Gehäuseteiles 1 durch eine ferromagnetische Platte 71 abgeschlossen, die Bestandteil der Magnetanordnungen der beiden Magnetventile ist. In diese ferromagnetische Platte 71 sind die Magnetschlußhülsen 54 und 70 der beiden Elektromagnete eingeschraubt, die von den Spulen 55 bzw. 68 umgeben werden. Die aus den Spulen herausragenden, oberen Enden der Magnetschlußhülsen sind durch eine weitere ferromagnetische Platte 72 miteinander verbunden. Die Anordnung ist dabei so getroffen, daß die beiden Magnetschlußhülsen für den magnetischen Fluß in Reihe geschaltet sind.

Sind bei der dargestellten Anordnung die beiden Magnetventile erregt und infolgedessen geöffnet bzw. zur Öffnung freigegeben, so kann ein Gasstrom von der Eingangskammer 2 nach Durchströmen eines darin angeordneten Filters 23 in Form zweier paralleler Ströme durch die offenen Ventilsitze 12, 13 hindurch in die mittleren Kammern 4, 5 gelangen. Diese Ströme werden dann nach Durchströmen der Ventilsitze 61, 62 in der Ausgangskammer 3 wieder vereinigt, so daß sie von dort aus einem an das mittlere Gehäuseteil angeschlossenen Verbraucher zugeführt werden können. Durch Schließen eines oder beider Ventile läßt sich der Gasstrom unterbrechen, sowie durch mehr oder weniger starkes Schließen der Ventilsitze 12, 13 der Gasstrom derart drosseln, daß das abströmende Gas den gewünschten Druck hat. Dabei ist ersichtlich, daß bei geschlossenem Gasdruckregler der Gasdruck in der Kammer 2 den oberen Ventilteller 18 im Sinne eines Öffnens und den unteren Ventilteller 14 im Sinne eines Schließens beaufschlagt, so daß sich die durch den Gasdruck auf diese beiden Ventilteller ausgeübten Kräfte aufheben. Dabei ist es wichtig, daß die von den schneidenförmigen Rändern am Ventilteller 14 bzw. am Ventilsitz 12 definierten, wirksamen Flächen der beiden Ventilabschnitte gleich sind. Daher arbeitet das Ventil und insbesondere auch der Gasdruckregler völlig unabhängig vom Druck des zugeführten, umgeregelten Gases. Entsprechendes gilt auch für das dem Regler nachgeschaltete Ventil, weil dort das in der oberen Kammer 4 den Ventilteller 63 belastende Gas im Sinne eines Schließens wirkt, wogegen das Gas in der unteren Kammer 5 auf den Ventilteller 64 im Sinne eines Öffnens wirkt. Auch hier heben sich daher die auf die Ventilteller wirkenden Kräfte auf. Es sind deshalb weder übermäßige Kräfte erforderlich, um dieses zweite Ventil geschlossen zu halten, noch um es gegen den herrschenden Gasdruck zu öffnen.

Es ist ersichtlich, daß die beschriebene Anordnung nur dann zufriedenstellend wirkt, wenn tatsächlich beide Ventilteller gleichzeitig dichtend auf den zugeordneten Ventilsitzen aufliegen. Es muß deshalb der Abstand zwischen den wirksamen Flächen der Ventilteller genau gleich dem Abstand zwischen den wirksamen Flächen der Ventilsitze sein. Um diese Bedingung zu erfüllen, ohne daß bei der Herstellung der Ventilsitz- und Ventilteller-Anordnungen sehr enge Toleranzen eingehalten werden müssen, wird eine individuelle Anpassung der Ventilteller-Anordnungen an jeweils die zugeordnete Ventilsitz-Anordnung vorgenommen. Zu diesem Zweck wird bei der Herstellung eines solchen Ventils oder Reglers mit zwei axial hintereinander angeordneten Ventiltellern zunächst nur einer der beiden Ventilteller auf der zu ihrem Antrieb dienenden Stange starr befestigt, während der andere auf der Stange gegen die Kraft einer Feder verschiebbar angeordnet wird. Bei der dargestellten Ausführungsform wird daher zu diesem Zweck bei dem Regler zunächst der obere Ventilteller 18 mittels eines Stiftes 81 auf der Stange 20 starr befestigt, während der untere Ventilteller 14 über eine auf die Stange 20 aufgeschobene Schraubendruckfeder 82 an dem oberen Ventilteller 18 abgestützt wird. Zusätzlich wird die Stange und der Ventilteller 14 im Bereich seiner die Stange 20 aufnehmenden Bohrung mit einem Kleber versehen. Dann wird diese Anordnung derart in das mittlere Gehäuseteil eingesetzt, daß der obere Ventilteller 18 mit vorbestimmter Kraft an seinem Ventilsitz 12 anliegt. Die Schraubendruckfeder 82 ist so bemessen, daß sie dann auch den unteren Ventilteller 14 mit der gewünschten Kraft an seinen Ventilsitz 13 anlegt. In diesem Zustand wird die Anordnung solange belassen, bis der Kleber abgebunden hat und dadurch den unteren Ventilteller 14 in einer dem Abstand zwischen den Ventilsitzen 12 und 13 genau angepaßten Stellung auf der Stange 20 fixiert. Anschließend wird die Stange 20 mit den beiden Ventiltellern 14 und 18 aus dem mittleren Gehäuseteil 1 wieder entnommen und der untere Ventilteller 14 durch einen Querstift 83 mit der Stange 20 endgültig verbunden. Auf diese Weise wird eine Anpassung der Ventilteller an die Ventilsitze mit höchster Genauigkeit erzielt, ohne daß bei der Fertigung enge Toleranzen eingehalten werden müßten. Es versteht sich, daß die Montage der Ventilteller 63, 64 auf der Stange 65 des Magnetventils der dargestellten Kombination in gleicher Weise erfolgt. Demgemäß sind die Ventilteller 63, 64 auf der Stange 65 durch Stifte 94, 85 fixiert und es befinden sich zwischen den beiden Ventiltellern eine Schraubendruckfeder 86, die nur für die Montage Bedeutung hatte und bei der fertigen Anordnung ohne Funktion ist.

Es versteht sich, daß die Erfindung nicht auf das dargestellte Ausführungsbeispiel beschränkt ist, sondern Abweichungen davon möglich sind, ohne den Rahmen der Erfindung zu verlassen. Insbesondere ist die erfindungsgemäße Ausbildung mit zwei Ventilsitzen und Ventiltellern auch bei einzelnen Magnetventilen sowie einzelnen Reglern möglich, wobei letztere mit einem Magnetventil kombiniert sein können oder nicht. Bei Einzelgeräten können die an die Außenseite der Magnetteller angrenzenden Kammern zu einem einzigen Ausgang zusammengeführt sein. Es können auch Adapter vorgesehen sein, um die Möglichkeit zu schaffen, solche Geräte mit parallelen Ausgängen direkt mit anderen Geräten zusammenzuschließen, die ebenfalls parallele Ein- oder Ausgänge aufweisen, oder unter Zwischenschaltung eines Adapters, in dem die Kanäle zusammengeführt werden, mit einer einzigen Anschlußleitung zu verbinden. Das dargestellte Ausführungsbeispiel macht jedoch deutlich, daß die Erfindung den Aufbau sehr kompakter Kombinationsgeräte mit großen Strömungsquerschnitten ermöglicht, die bei einfachstem Aufbau eine hohe Schalt- und Regelwirksamkeit haben und gleichzeitig einen geringen Druckabfall verursachen.

**Patentansprüche**

1. Verfahren zur Montage eines Doppelsitzventils, das eine Kammer (2), die in einer Seite eine freie Öffnung und in an die Öffnung angrenzenden, einander gegenüberliegenden Wänden (6, 7) zwei zueinander koaxial angeordnete Ventilsitze (12, 13) aufweist, sowie zwei auf einer gemeinsamen Stange (20) befestigte, mit den Ventilsitzen zusammenwirkende Ventilteller (14, 18) umfaßt, von denen der in Schließrichtung vordere Ventilteller (14) durch den in Schließrichtung hinteren Ventilsitz (12) hindurchpaßt, dadurch gekennzeichnet daß der erste, in Schließrichtung hintere Ventilteller (18) auf der Stange (20) starr befestigt wird, daß der zweite, in Schließrichtung vordere Ventilteller (14) auf die gleiche Stange (20) lose aufgesteckt und mit seiner dem ersten Ventilteller (18) zugewandten Seite an einer auf der Stange angeordneten Feder (82) abgestützt wird, daß die Stange (20) und der zweite Ventilteller (14) mit einem Kleber versehen werden, daß die Stange (20) mit dem zweiten Ventilteller (14), gegebenenfalls unter gleichzeitigem Zusammenpressen dieses Ventiltellers, durch den dem ersten Ventilteller (18) zugeordneten Ventilsitz (12) hindurchgesteckt und der erste Ventilteller (18) an dem ihm zugeordneten Ventilsitz (12) zur Anlage gebracht wird, während gleichzeitig der zweite Ventilteller (14) von der Feder (82) an dem ihm zugeordneten Ventilsitz (13) in Anlage gehalten wird, und daß die Anordnung in dieser Stellung bis zum Abbinden des Klebers belassen wird.

2. Verfahren nach Anspruch 1, dadurch gekennzeichnet, daß die Stange (20) mit den Ventiltellern (14, 18) nach dem Abbinden des Klebers von den Ventilsitzen (12, 13) wieder getrennt und der zweite Ventilteller (14) mit der Stange (20) zusätzlich formschlüssig verbunden, insbesondere verstiftet wird.

3. Verfahren nach Anspruch 1 oder 2, dadurch gekennzeichnet, daß als Feder (82) eine auf die Stange (20) aufgeschobene, sich an dem ersten Ventilteller (18) abstützende Schraubendruckfeder verwendet wird.

4. Regler-Ventil-Kombination mit zwei nach dem Verfahren gemäß einem der Ansprüche 1 bis 3 hergestellten Doppelsitzventilen, dadurch gekennzeichnet, daß die beiden Doppelsitzventile in einem gemeinsamen Gehäuse (1) angeordnet sind, ihre Stangen (20, 65) mit einem Elektromagneten bzw. einem Reglerantrieb verbunden sind und ihre an die Außenseiten der Ventilteller (14, 18) angrenzenden Räume (4, 5) paarweise miteinander und durch einen Querkanal (11) untereinander verbunden sind, in welchen Querkanal ein Rohr (36) mündet, das eine Verbindung zur Solldruck-Kammer (33) des Reglers herstellt.

**Revendications**

1. Procédé de montage d'une soupape à double siège qui comprend une chambre (2), qui présente d'un côté une ouverture libre et, dans des parois (6, 7) mutuellement opposées et adjacentes à l'ouverture, deux sièges de soupape (12, 13) agencés coaxialement l'un à l'autre, ainsi que deux plateaux de soupape (14, 18) qui sont fixés sur une tige commune (20) et coopèrent avec les sièges de soupape et dont le plateau de soupape avant dans le sens de fermeture (14) passe à travers le siège de soupape arrière dans le sens de fermeture (12), caractérisé en ce que le premier plateau de soupape arrière dans le sens de fermeture (18) est fixé de manière rigide sur la tige (20), en ce que le deuxième plateau de soupape avant dans le sens de fermeture (14) est emmanché de manière lâche sur la même tige (20) et est en appui par son côté tourné vers le premier plateau de soupape (18) sur un ressort (82) agencé sur la tige, en ce que la tige (20) et le deuxième plateau de soupape (14) sont pourvus d'un agent adhésif, en ce que la tige (20) est avec la deuxième plateau de soupape (14) passée à travers le siège de soupape (12) adjoint au premier plateau de soupape (18), éventuellement avec pressage simultané du deuxième plateau de soupape, le premier plateau de soupape (18) étant amené en appui sur le siège de soupape (12) qui lui est adjoint, pendant que simultanément le deuxième plateau de soupape (14) est maintenu en appui sur le siège de soupape (13) qui lui est adjoint par le ressort (82), et en ce que l'agencement dans cette position est laissé jusqu'à la prise l'agent adhésif.

2. Procédé suivant la revendication 1, caractérisé en ce que la tige (20) est, avec les plateaux de soupape (14, 18), à nouveau séparée des sièges de soupape (12, 13) après la prise de l'agent adhésif et en ce que le deuxième plateau de soupape (14) est relié en supplément à liaison de forme à la tige (20), en particulier par l'intermédiaire d'un goujon.

3. Procédé suivant l'une des revendications 1 et 2, caractérisé en ce que, comme ressort (82), on utilise un ressort de pression hélicoïdal qui est emmanché sur la tige (20) et qui s'appuie sur le premier plateau de soupape (18).

4. Unité de régulateur-soupape comprenant deux soupapes à double siège préparées selon le procédé suivant l'une des revendications 1 à 3, caractérisé en ce que les deux soupapes à double siège sont agencées dans un logement commun (1), en ce que leurs tiges (20, 65) sont reliées à un électro-aimant ou respectivement un organe d'entraînement de régulateur et en ce que leurs chambres (4, 5) adjacentes aux côtés externes des plateaux de soupape (14, 18) sont mutuellement reliées par paires et en communication entre elles par un canal transversal (11) dans lequel débouche un tube (36) qui réalise une communication vers la chambre de pression de consigne (33) du régulateur.

**Claims**

1. Method for the assembly of a double-seat valve, having a chamber (2), which comprises a free opening in one side and two valve seats (12, 13) arranged coaxially with respect to each other in walls (6, 7) lying opposite each other and adjoining the opening, as well as two valve discs (14, 18) attached to a common rod (20) and cooperating with the valve seats, whereof the front valve disc (14) in the closing direction fits through the rear valve seat (12) in the closing direction, characterised in that the first rear valve disc (18) in the closing direction is rigidly attached to the rod (20), that the second, front valve disc (14) in the closing direction is loosely fitted on the same rod (20) and is supported by its side facing the first valve disc (18) on a spring (82) arranged on the rod, that the rod (20) and the second valve disc (14) are provided with an adhesive, that the rod (20) with the second valve disc (14), possibly with simultaneous compression of this valve disc, is pushed through the valve seat (12) associated with the first valve disc (18) and the first valve disc (18) is brought to bear against the valve seat (12) associated therewith, whereas at the same time the second valve disc (14) is held by the spring (82) in abutment with the valve seat (13) associated therewith and that the arrangement is left in this position until the adhesive sets.

2. Method according to Claim 1, characterised in that after the adhesive sets, the rod (20) with the valve discs (14, 18) is separated from the valve seats (12, 13) and the second valve disc (14) is by way of addition positively connected to the rod (20), in particular it is pinned.

3. Method according to Claim 1 or 2, characterised in that a compression spring fitted to the rod (20) and supported on the first valve disc (18) is used as the spring (82).

4. Regulator/valve combination with two double seat valves produced by the method according to one of Claims 1 to 3, characterised in that the two double seat valves are arranged in a common housing (1), their rods (20, 65) are connected to an electromagnet or a regulator drive and their chambers (4, 5) adjoining the outsides of the valve discs (14, 18) are connected to each other in pairs and by a transverse channel (11), into which transverse channel a pipe (36) opens, which produces a connection to the reference pressure chamber (33) of the regulator.